Europäisches Patentamt

European Patent Office

Office européen des brevets

(19)

(11) Veröffentlichungsnummer: **0 283 533 B1**

## (12) EUROPÄISCHE PATENTSCHRIFT

(45) Veröffentlichungstag der Patentschrift: **03.02.93**

(21) Anmeldenummer: **87104284.2**

(22) Anmeldetag: **24.03.87**

Die Akte enthält technische Angaben, die nach
dem Eingang der Anmeldung eingereicht wurden
und die nicht in dieser Patentschrift enthalten sind.

(51) Int. Cl.5: **B41B 19/01**, H04N 1/411,
G09G 1/00

(54) **Digitale Speicherung von Kanji-Schriften.**

(43) Veröffentlichungstag der Anmeldung:
**28.09.88 Patentblatt 88/39**

(45) Bekanntmachung des Hinweises auf die
Patenterteilung:
**03.02.93 Patentblatt 93/05**

(84) Benannte Vertragsstaaten:
**BE DE FR GB IT LU NL**

(56) Entgegenhaltungen:
**GB-A- 2 105 503**
**US-A- 4 630 309**

**TRANSACTIONS OF THE I.E.C.E. OF JAPAN,
Band E66, Nr. 6, Juni 1983, Seiten 377-382,
Tokyo, JP; T. SUGITA et al.: "Multi-font KANJI
generator"**

(73) Patentinhaber: **URW Unternehmensberatung
Karow Rubow Weber GmbH
Harksheider Strasse 102
W-2000 Hamburg 65(DE)**

(72) Erfinder: **Karow, Peter, Dr.
Kreienkoppel 55
W-2000 Hamburg 65(DE)**

(74) Vertreter: **UEXKÜLL & STOLBERG Patentanwälte
Beselerstrasse 4
W-2000 Hamburg 52(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 283 533 B1

EP 0 283 533 B1

**Beschreibung**

Die Erfindung betrifft ein Verfahren zur Erstellung einer zum Setzen von Kanji-Zeichen mit elektronischen Setzmaschinen geeigneten digital gespeicherten Elementenbibliothek mit zugehörigen Einbauparametern durch Zerlegung dieser Zeichen in Elemente und selektive Speicherung der abgespaltenen Elemente.

Für die digitale Speicherung von Schriften sind verschiedene Verfahren bekannt, vergl. Peter Karow, Digitale Speicherung von Schriften, URW Verlag Hamburg, Nr. 1 7/86; Typografische Monatsblätter TM2, 1980; IKARUS for Typefaces in Digital Form, URW Broschüre, Hamburg, 7/83.

Dabei gilt allgemein die Regel: je höher die Anforderungen an die Druckqualität, desto höher der Speicheraufwand und je einfacher das Speicherformat, desto schneller die Ausführung des Satzes, aber auch desto höher der Speicheraufwand.

Als Beispiel ist nachstehend der Speicherbedarf für eine Reihe der wichtigsten Satzformate bei einer Rasterung von 1000 x 1000 Pixel (Bildpunkte) angegeben.

| Format | Speicherbedarf |
|---|---|
| Bitmap | 128 kByte |
| Lauflängencodierung | 4 kByte |
| Vektorumriß | 0,4 kByte |
| Kurvenumriß | 0,3 kByte |
| IKARUS-Format | 0,2 kByte |

Die Unterschiede zwischen den drei letztgenannten Formaten scheinen relativ klein zu sein, betragen aber doch mehr als 50 %, jeweils vom IKARUS-Format ausgehend.

Nun ist aber gerade der Speicherbedarf bei der Digitalisierung von Kanji-Schriften die bestimmende Größe, weil sogar das unter allen bekannten Formaten bezüglich der Anforderungen an Speicherkapazität bescheidenste, das IKARUS-Format, für das Setzen von Kanji-Schriften bisher einen wirtschaftlich nicht tragbaren Aufwand an Speicherkapazität erfordert

In der Praxis werden für den Druck immer einige Schriftarten in verschiedenen Fettegraden und Größen gleichzeitig benötigt. So kann man auf der ersten Zeitungsseite beliebiger Tageszeitungen meist mehr als 14 verschiedene Fonts eingesetzt finden. Ein Font ist eine Schriftart in bestimmter Fette und Größe. Üblicherweise umfaßt ein lateinisches Font zwischen 100 bis 200 Zeichen (Alphabet, Interpunktionen,Ziffern, Währungszeichen, Piktogramme, Brüche, Indices etc.): also im Mittel 150 Zeichen. Daher ist der Speicherbedarf für eine lateinische Schrift im Mittel 150 * 0.2 kByte = 30 kByte (selbst bei Benutzung des IKARUS-Formates).

Auch für den Satz in Kanji findet man die Bedingung, gleichzeitig mehrere Schriften im Einsatz halten zu müssen. Doch mit welcher Konsequenz: ein Kanji-Font umfaßt 5400 bis 9000 Zeichen, wovon jedes im Mittel 4,5 mal komplizierter als das mittlere lateinische Zeichen ist. 5400 braucht man für Überschriften, 9000 für den Text. Man kann also im Mittel 8000 Zeichen pro Font setzen, da Text häufiger vorkommt als Überschrift. Der Speicheraufwand für ein Kanji-Font beträgt selbst bei Einsatz des an Speicherbedarf sparsamsten bekannten Formates (IKARUS-Format) demnach: 0,2 kByte x 4,5 x 8000 = 7.2 MByte (netto, zuzüglich Datenverwaltung). Bei Verwendung anderer bekannter, noch in erheblichem Umfang in Gebrauch befindlicher Speicherformate verschlechtert sich die Situation noch Weiter, denn der Speicheraufwand nähme erheblich zu (s.o.)

Der Aufwand für die Speicherung einer Kanji-Schrift steht also zu dem für die Speicherung einer lateinischen Schrift im günstigsten Fall im Verhältnis von 7,2 MByte :30 kByte = 240 : 1!

Von lateinischen Schriften, deren wesentlich geringerer Speicherbedarf die Verwendung eines einzigen RAM-Chips (32 kByte) erlaubt, ist man ja Setzgeschwindigkeiten von 500 bis 2000 Zeichen pro Sekunde gewöhnt. Also möchte man für den Satz von Kanji ähnliche Leistungen anstreben, desgleichen mehrere Schriften ganz speichern.

Im Rahmen der heutigen Technik stehen dafür nur sogenannte RAM (random access memory)-Halbleiterspeicher zur Verfügung. Andere billigere Techniken (Magnetplatte, CD-ROM) entfallen, weil sie höchstens eine Zugriffsgeschwindigkeit von 10 Zeichen/sec erlauben und daher zu nicht akzeptablen Setzgeschwindigkeiten für Kanji führen würden.

Die Herstellungskosten von Setzmaschinen bewegen sich zwischen DM 2.000,- und DM 20.000,- für Laserdrucker und zwischen DM 20.000,- und DM 100.000,- für Laserfilmbelichter.

Wenn man annimmt, daß etwa 10 Kanji-Schriften geladen werden sollen, braucht man 10 * 7,2 MByte Speicher.

Die Herstellungskosten für 72 MByte RAM belaufen sich heute noch auf mehr als DM 36.000,-, sind also nicht unerheblich teurer als die Herstellungskosten eines Laserdruckers und liegen sogar in der Größenordnung derjenigen eines Laserfilmbelichters. Diese zusätzlichen Ausgaben sprengen den Kostenrahmen bei Laserdruckern und haben auch sehr großes Gewicht bei Filmbelichtern.

Es besteht also das Problem, eine Methode zu finden, den Speicheraufwand für Kanji-Schriften unter Beibehaltung der von mechanischen Verfahren gewohnten graphischen Qualität erheblich zu reduzieren.

Wie jedermann in Fernost weiß, bestehen die Kanji-Zeichen aus sogenannten Radikalen. Zum Beispiel ist das Zeichen für Person:

人

(NIN). Es kommt allein vor, aber auch als Radikal in einem aus Radikalen zusammengesezten Zeichen, z.B. in dem Zeichen
für jeder:

每

(MAI).

Es hat dort eine geänderte Form, nämlich

⼌一 .

Das Zeichen

毋

(BO) heißt Mutter und kommt auch allein vor.

Das Zeichen

休

(KYUU) heißt Ruhe und besteht aus dem Radikal für Person

亻

in abgewandelter Form und dem
für Baum

木

(BOKU).

Das Zeichen für Person macht also Transformationen durch, um weiteren Radikalen Platz für Formung eines neuen Zeichens zu geben. Der gesamte Raum für ein Kanji-Zeichen ist vorgegeben als ein Quadrat, das man Geviert nennt und das eine Seitenlänge gleich dem Zeilenabstand bei normalem Textsatz hat.

Das Zeichen

仲

(CHUU) heißt Beziehungen (zwischen Personen). In den beiden letzten kompletten Kanji-Zeichen wird das Zeichen

亻

in gleicher Weise geschrieben.
   Die Radikale

中   und   毌

kommen auch in anderen Zeichen vor.
   Alleinstehend heißt das Zeichen

中

(NAKA) Mitte.
   Man könnte daher auf den Gedanken kommen, eine Kanji-Schrift in Radikale zu zerlegen, nur diese zu speichern, die Schriftzeichen bei Bedarf aus den Radikalen zusammenzusetzen und auf diese Weise eine erhebliche Einsparung an beanspruchter Speicherkapazität zu erzielen. Tatsächlich sind auch solche Versuche unternommen worden, z.B. an den Universitäten von Tokyo und New York, die aber keinen Erfolg hatten.
   Eine befriedigende Wiedergabe der Zeichen ist nicht geglückt, weil die Änderungen an den Formen und Positionen der Radikale, die für deren Einbau in die verschiedenen individuellen Zeichen notwendig sind, nicht realisiert werden konnten, wie z.B. MAI und CHUU. Sogar Vorschläge zum Zusammensetzen gespeicherter Zeichenbestandteile, über deren Herstellung und Speicherung nichts gesagt ist, zu Kanji-Zeichen, siehe z.B. GB-A-2 105 503 und Takuya Sugita et al, The Transactions of the IECE of Japan, Vol. E. 66 No. 6, haben keinen Eingang in die Praxis gefunden, vielleicht (auch) wegen der offenbar im Hinblick auf die Notwendigkeit, Speicherkapazität zu sparen, vorgeschlagenen groben Auflösung von bestenfalls 24 x 24 Pixel pro Geviert, die eine zu schlechte Bildqualität ergibt.
   Die vorliegende Erfindung erlaubt die Speicherung einer kompletten Bibliothek von Elementen, aus der bei Bedarf alle Zeichen der gespeicherten Kanji-Schrift in guter Qualität und Lesbarkeit zusammengesetzt werden können unter erheblicher Verringerung der nach bekannten Verfahren erforderlichen Speicherkapazität.
   Sie beruht im wesentlichen auf einer besonderen Art der Datenaufnahme und -speicherung, wobei außer der Zerlegung des Zeichens in seine Radikale auch eine weitere Zerlegung der Radikale - soweit notwendig oder nützlich- in kleinere Elemente in Betracht kommt und für jedes gespeicherte Kanji-Zeichen die Katalognummern der es aufbauenden Elemente zusammen mit den für ihren Einbau in das Zeichen zu berücksichtigenden Einbauparametern gespeichert werden.
   Bei der Datenaufnahme für ein Kanji-Font von etwa 8000 Zeichen werden

1) die zu speichernden Kanji-Zeichen gescannt, vorzugsweise automatisch mit dem unter dem Namen LINUS ® im Handel erhältlichen und in der USA-Patentschrift 4,630.309 beschriebenen Gerät und Verfahren.

2) Die so erhaltenen Konturen werden gemäß den Regeln des IKARUS-Formates (vorübergehend) digital gespeichert, vorzugsweise in einem Zwischenspeicher.

3) Aus jedem dieser gespeicherten Zeichen werden passende Elemente abgespalten, worunter Radikale, Teile von Radikalen, Grapheme, einzelne Konturen oder Striche zu verstehen sind. Die Abspaltung der Elemente erfolgt bei der einfachsten Ausführungsform der Erfindung durch menschliche Interaktion mit einem graphischen Bildschirm. Eine nachstehend in Punkt 10) erläuterte besondere Ausführungsform

4

erlaubt aber auch, die Elementzerlegung vollautomatisch vom LINUS-Gerät durchführen zu lassen.

Bei jeder Abspaltung eines Elementes werden die zugehörigen Umrißdaten des Elementes zunächst einmal aus den Daten des Kanji-Zeichens im Zwischenspeicher herausgenommen und in einem zweiten Zwischenspeicher gehalten. An seiner Statt wird in den ersten Zwischenspeicher eine Elementnummer für das zugehörige Kanji-Zeichen eingetragen zusammen mit fünf zusätzlichen Einbauparametern, nämlich

- Schwerpunktverschiebung in x-Richtung,
- Schwerpunktverschiebung in y-Richtung,
- Drehwinkel um den Schwerpunkt,
- Umgrößerung (d.h. Dehnung oder Stauchung) in x-Richtung (x-Faktor) und
- Umgrößerung (d.h. Dehnung oder Stauchung) in y-Richtung (y-Faktor).

Tatsächlich werden diese Einbauparameter bei der Abspaltung eines Elementes zunächst auf Null gesetzt, was gleichbedeutend ist mit: keine Transformation durch die Einbauparameter bei Wiedereinbau.

4) Das abgespaltene Element soll nun in die Elementenbibliothek überstellt werden. Doch vorher wird geprüft, ob es in der im Aufbau befindlichen Elementenbibliothek bereits ein Element gibt, das mit dem abgespaltenen identisch ist oder in dieses überführt werden kann durch eine bestimmte Wahl der fünf Einbauparameter, die eine bestimmte Verschiebung, Drehung und Umgrößerung des Elementes der Bibliothek bewirken.

5) Ist beides nicht der Fall, wird das neu abgespaltene Element unter seiner neuen Elementnummer in die Bibliothek überstellt und im zweiten Zwischenspeicher gelöscht.

6) Liegt ein identisches Element in der Bibliothek vor, wird dessen Elementnummer mit den Einbauparametern in das betroffene Kanji-Zeichen eingetragen, aus dem das gerade bearbeitete Element stammt. Die Umrißdaten des abgespaltenen Elementes werden gelöscht, können also eingespart werden.

7) Findet sich in der im Aufbau befindlichen Bibliothek ein Element, das mit dem zu prüfenden zwar nicht identisch ist, dessen Umwandlung in das zu prüfende, abgespaltene Element nicht aussichtslos erscheint, wird geprüft, ob schrittweise ausreichende Deckungsgleichheit durch Variation der Einbauparameter erzielt werden kann. Wenn dies der Fall ist, wird für das gerade bearbeitete Kanji-Zeichen die Nummer des Bibliothekselementes zusammen mit der besten Wahl der Einbauparameter eingetragen. Die Umrißdaten des abgespaltenen Elementes werden gelöscht, können also weitgehend eingespart, nämlich durch die 5 Einbauparameter zusätzlich zur neuen Elementnummer ersetzt werden. Da für die Speicherung jedes dieser (5 + 1) = 6 Parameter je 2 Byte ausreichend sind, erfordert das modifizierte abgespaltene Element insgesamt (5 + 1) x 2 = 12 Bytes.

8) Kann nach mehreren Versuchen zur immer besseren Anpassung mit Hilfe einer schrittweisen Variation der Einbauparameter das Bibliothekselement doch nicht mit dem abgespaltenen Element zur Deckung gebracht werden, dann wird wie bei 5) verfahren.

9) Dieser Anpassungsversuch mit einem Element kann auch mit mehreren Elementen ausgeführt werden, letzten Endes mit der jeweils aktuell vorhandenen Bibliothek. Die Güte der Anpassung oder Deckungsgleichheit kann durch Rechnungen ermittelt werden, z.B. dadurch, daß die Abstände aller Teile der zu vergleichenden Konturen in sehr kleinen Schritten, z.B. millimeterweise ermittelt und deren Beträge zur Gütezahl D summiert werden. Da die Abstände in gleichbleibenden Schritten gebildet werden, entspricht jedem Abstandsergebnis auch der zugehörige Flächeninhalt eines Rechteckes mit der Länge des betreffenden Abstandes und der Breite des Abstandschrittes. Alle Abstände summiert ergeben demnach die Größe der nicht von beiden Konturen gleichzeitig eingeschlossenen Flächen. Als Gütezahl D wird definiert das Verhältnis dieser Fehlerfläche zur Fläche des abgespaltenen Elementes.

Die kleinste Gütezahl erlaubt automatisch das "ähnlichste" Element auszuwählen. Damit kann gemäß 7) oder 8) verfahren werden. Insgesamt werden also die Schritte 4) bis 8) automatisiert.

10) Wenn man 4) - 9) einbindet in einen Programmablauf, kann man damit komplett gespeicherte Kanji-Schriften vollautomatisch einer Elementzerlegung unterwerfen. Dabei wird bei jeder neuen automatischen Abspaltung immer der aktuelle Stand der im Aufbau befindlichen Bibliothek herangezogen. Zur Abspaltung eines Elementes dient jetzt nur noch das Kriterium, daß es sich um eingeschlossenes, isoliert liegendes schwarzes Gebiet handeln muß.

11) Zum Beispiel ist eine Deckungsgleichheit von 0,5 % eine sehr gute Anpassung und eine Deckungsgleichheit von 2 % eine grobe, unter Umständen auch noch brauchbare Anpassung. Durch komplette Speicherung von zunächst allen Umrißlinien einer Kanji-Schrift kann man daher durch verschiedene Güteforderungen für verschiedene Anwendungen adäquate Lösungen finden, nämlich durch niedrigere Güteanforderungen (entsprechend einer höheren Gütezahl) z.B. für Laserdrucker und durch höhere Güteansprüche (entsprechend kleinerer Gütezahl) immer noch ausreichende Speicherersparnis z.B. für Laserfilmbelichter.

Die Erfindung ist nachstehend anhand eines Ausführungsbeispieles näher erläutert.

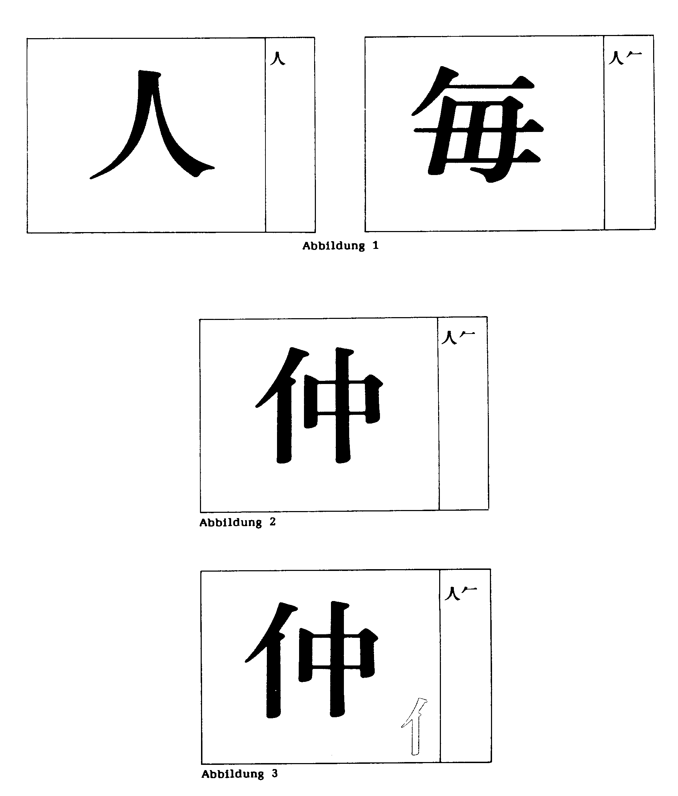

Bei der Datenaufnahme wird das gesamte Zeichen zunächst elektronisch auf dem Bildschirm dargestellt, vorzugsweise grau auf hellem Grund, und zwar mit dem in der USA-Patentschrift 4,630.309 und in der Europäischen Patentanmeldung 84 101 622.3 beschriebenen LINUS-Gerät. Die Verwendung dieses Gerätes bietet den Vorteil, daß auf dem Bildschirm die errechneten Umrißlinien ebenfalls schwarz eingezeichnet und zu erkennen sind (Abb. 1). Nun soll das Zeichen gemäß Abbildung 2 verarbeitet werden.

Als nächstes fährt man mit dem Fadenkreuz des Bildschirms, gesteuert durch die Digitalisierungslupe die Kontur des Elementes an, das daraufhin überprüft werden soll, ob es durch die Kontur des ähnlichen Elementes 25.1 aus der Elementenbibliothek ersetzt oder neu in diese aufgenommen werden soll.

Es wird abgespalten (Abb. 3).

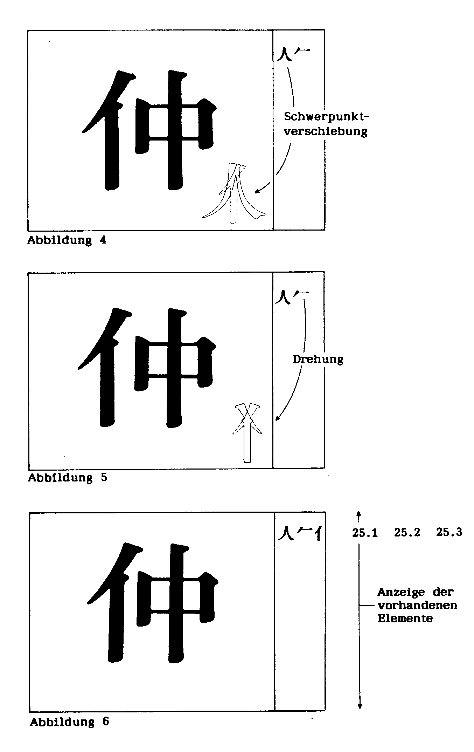

Die Anpassung des Elementes 25.1 gelingt nicht (Abb. 4).

Ebensowenig die Anpassung des Elementes 25.2 (Abb. 5). Also wird entschieden, ein neues Element 25 mit der Variante 3 unter Nummer 25.3 in die Bibliothek aufzunehmen (Abb. 6). Wenn nun später im Verlauf der Produktion weitere Zeichen kommen, wie das in Abb. 7 gezeigte Kanji-Zeichen, dann wird das Element 25.3 bereits vorhanden und eine Einsparung an Daten möglich sein.

Eine Vorstellung von der erfindungsgemäß ermöglichten Einsparung an Speicherkapazität gibt die nachstehende Überschlagsrechnung.

Realistisch erscheinen folgende Näherungsangaben:

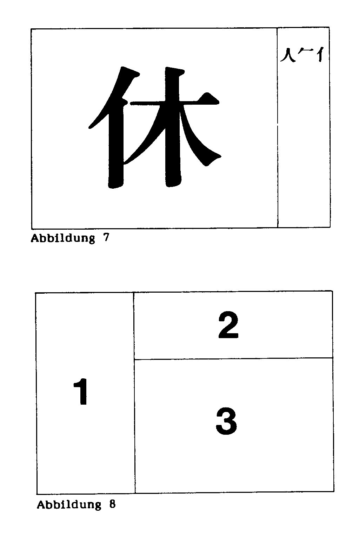

Im Mittel sind Kanji-Zeichen aus drei Elementen zusammengesetzt (siehe Abb. 8). Untersuchungen im Rahmen dieser Erfindung haben gezeigt:

Von 8000 Zeichen lassen sich     60 % ganz aus Elementen,
                                             15 % zu 2/3,
                                           15 % zu 1/3 und
                                         10% gar nicht aus Elementen
                                           zusammensetzen.

Ferner muß man mit etwa 1500 Elementen für die Elementenbibliothek rechnen.

Unser Ausgangspunkt ist:

Eine Kanji-Schrift umfaßt etwa 8000 Zeichen, die bei konventioneller Speicherung selbst bei Verwendung des IKARUS-Formates 225 x 4 Bytes = 900 Bytes, also einem Bedarf von 7.200 kByte entsprechen.

Daraus leiten wir ab, daß ein Element etwa 900/3 = 300 Bytes Speicher verbraucht.

Also ergibt sich:

```
1.   Speicherbedarf für die Elementenbibliothek ist

     1500 x 300 Bytes              =    450,0 kBytes

2.   Der geänderte Speicherbedarf für
     die Kanji-Schrift ist:

2.1  4800 Zeichen (ganz zerlegbar) haben
     keinen Restbedarf im Font, doch erfordert jedes der sie
     aufbauenden durchschnittlich 3 Elemente (5 + 1) x 2 =
     12 Bytes für die 5 Einbauparameter und eine Elementnummer,
     also 3 x 12 Bytes je Zeichen,
     mithin 36 Bytes * 4800        =    172,8 kBytes

2.2  1200 Zeichen (2/3 zerlegbar) verlangen
     300 Bytes Restbedarf im Font,
     also 300 * 1200               =    360,0 kBytes
     und für Elementeinträge
     2 * 12 Bytes * 1200           =     28,8 kBytes

2.3  1200 Zeichen (1/3 zerlegbar) erfordern
     600 Bytes Restbedarf im Font,
     also 600 * 1200               =    720,0 kBytes
     und für Elementeinträge   12 * 1200 =   14,4 kBytes

2.4  800 Zeichen (nicht zerlegbar) verlangen
     900 Bytes Bedarf, also 800 * 900    =   720,0 kBytes
                                       ------------------
                               Summe   = 2.466,0 kBytes
                                       =      2,4 MBytes
```

Je nach Sonderheiten der betreffenden Kanji-Schrift wird man mit mehr oder unter Umständen auch mit weniger Speicherbedarf auskommen. Verglichen mit dem eingangs besprochenen minimalen Speicherbedarf von 7,2 Mb nach dem an Speicherbedarf weitaus sparsamsten Format, dem IKARUS-Format, kann demnach die Datenreduktion bis zum Faktor 3 gehen.

**Patentansprüche**

1. Verfahren zur Herstellung einer für den Aufbau von Kanji-Schriftzeichen geeigneten Bibliothek von Elementen, mit folgenden Schritten: Speicherung der Kontur eines das jeweilige Element enthaltenden Kanji-Zeichens in einem ersten Zwischenspeicher, Abspaltung isolierter, in sich zusammenhängender Flächen aus dieser Kontur als Elemente, und Speicherung dieser Elemente in einem zweiten Zwischenspeicher, Prüfung jedes dieser Elemente darauf, ob es mit einem in der im Aufbau befindlichen Bibliothek bereits vorhandenen Element identisch ist oder durch Transformation mit einem solchen zur Deckung gebracht werden kann, bejahendenfalls Eintragung der Katalognummer dieses bereits in der Bibliothek vorhandenen Elementes bei dem Kanji-Zeichen, aus dem es abgespalten wurde, zusammen mit seinen Einbauparametern, Löschung seiner Konturen im untersuchten Kanji-Zeichen oder verneinendenfalls Eintragung dieses Elementes unter einer neuen Katalognummer in der Bibliothek und Eintrag dieser Nummer beim untersuchten Kanji-Zeichen zusammen mit seinen Einbauparametern.

2. Verfahren nach Anspruch 1, dadurch gekennzeichnet, daß die Transformation mindestens eine der Operationen x- oder y-Translation, x- oder y-Umgrößerung oder Rotation, vorzugsweise um den Schwerpunkt der von der Kontur umschlossenen Fläche, umfaßt.

3. Verfahren nach den Ansprüchen 1 und 2 dadurch gekennzeichnet, daß die Prüfung auf Deckungsgleichheit durch Messung der Abstände der zu vergleichenden Konturen in vorzugsweise gleichbleibenden kleinen Schritten senkrecht zur Umrißlinie erfolgt und das Verhältnis der nicht von beiden Konturen

7

EP 0 283 533 B1

umschlossenen Fläche zur Gesamtfläche des Zeichens als Gütezahl für die Deckungsgleichheit verwendet wird.

4. Verfahren nach Anspruch 3, dadurch gekennzeichnet, daß eine Gütezahl von nicht schlechter als 2 % und vorzugsweise von 0.5 % und besser eingehalten wird.

5. Verfahren nach den Ansprüchen 1 bis 4 dadurch gekennzeichnet, daß die für den ersten Zwischenspeicher bestimmte Kontur durch Scannen der Vorlage, Transformation der erhaltenen Bildinformation in Vektordaten, Unterwerfung derselben einem Gestalterkennungsprogramm, bei dem ganze Vektorzüge als Gestaltelemente wie Gerade, flache, normale und enge Kurve, runde und scharfe Ecke, Tangenten- und Wendepunkt klassifiziert werden und anschließende Unterwerfung derselben einem Spline-Fit mit den Nachbarelementen, durch den an den Stoßstellen Übereinstimmung der x-y-Koordinaten, Steigungen und Krümmungen erzielt wird.

6. Verfahren nach den Ansprüchen 1 bis 5 dadurch gekennzeichnet, daß die im ersten Zwischenspeicher gespeicherte Kontur in nach dem IKARUS-Format hochaufgelösten Form, vorzugsweise mit einer Genauigkeit von 0.01 mm bei 20 cm Höhe vorliegt.

7. Verfahren nach den Ansprüchen 1 bis 6 gekennzeichnet durch Einbindung aller Verfahrensschritte in ein vollautomatisch ablaufendes Programm.

**Claims**

1. Method for generating a library of elements suited for forming Kanji-characters comprising the following steps: storing the outline of a Kanji-character containing the respective element in a first buffer, separating discrete and coherent surfaces from this outline as elements, and storing these elements in a second buffer, checking each element whether it is identical with an element already stored in the library to be set up or whether it can be made conforming to such element by transformation and if so entering the catalogue number of this already in the library existing element at the Kanji-character from which it has been derived, together with its inserting parameters, deleting its boundary lines in the checked Kanji-character or, if not so, entering this element under a new catalogue number into the library and entering this number at the checked Kanji-character together with its inserting parameters.

2. Method according to claim 1, **characterized** in that the transformation comprises at least one operation of x- or y-translation, x- or y-change of size or rotation, preferably around the centre of gravity of the area limited by said boundary line.

3. Method according to claims 1 and 2, **characterized** in that the check for conformity is made by measuring the distances of the boundary lines to be compared in preferably equal small steps perpendicular to the boundary line and that the ratio of the area which is not surrounded by the two boundary lines to the total area of the character is used as a number indicating how well the conformity fits.

4. Method according to claim 3, **characterized** in that quality factor of not worse than 2% and preferably of 0.5% and better is maintained.

5. Method according to claims 1-4, **characterized** in that the boundary line for the first buffer is obtained by scanning the original, transforming the derived image information into vector data, processing same through a shape-recognizing program wherein entire vector trains are categorized as shape elements like straight line, large, normal and narrow curve, round and sharp corners, tangent and points of inflection and subsequently making them undergo a spline-fit with the neighbouring elements by which a fit is achieved in the x-y-coordinates, slopes and curvatures at the abutting locations.

6. Method according to claims 1-5, **characterized** in that the boundary line stored in the first buffer exists in high-resolution form according to IKARUS-format, preferably with a tolerance of 0.01 mm at 20 cm height.

7. Method according to claims 1-6, **characterized** by performing all method steps by a fully automatically

8

running program.

**Revendications**

**1.** Procédé pour l'élaboration d'une bibliothèque d'éléments appropriés pour la constitution de caractères kanji, avec les étapes suivantes : mise en mémoire dans une première mémoire intermédiaire du contour d'un caractère kanji qui contient l'élément respectif, clivage à partir de ce contour de surfaces isolées, cohérentes en elles-mêmes comme éléments et mise en mémoire de ces éléments dans une seconde mémoire intermédiaire, vérification de chacun de ces éléments pour savoir s'il est identique avec un élément déjà existant dans la bibliothèque qui est en cours de constitution ou s'il peut être amené à coïncider par transformation avec un tel élément, dans l'affirmative enregistrement du numéro de catalogue de cet élément existant déjà dans la bibliothèque pour le caractère kanji à partir duquel il a été séparé avec ses paramètres d'installation, effacement de ses contours dans le caractère kanji examiné ou, dans la négative, enregistrement de cet élément sous un nouveau numéro de catalogue dans la bibliothèque et enregistrement de ce numéro pour le caractère kanji examiné avec ses paramètres d'installation.

**2.** Procédé selon la revendication 1, **caractérisé en ce** que la transformation comprend au moins une des opérations de translation de x ou y transformation de grandeur de x ou y ou rotation, de préférence autour du centre de gravité de la surface ceinte par le contour.

**3.** Procédé selon les revendications 1 et 2, **caractérisé en ce** que la vérification de la coïncidence est effectuée par la mesure des écarts des contours à comparer dans des petits pas qui, de préférence, sont invariables, perpendiculairement par rapport à la ligne de contour et que le rapport de la surface qui n'est pas ceinte par les deux contours et de surface totale est utilisé comme indice de qualité pour la coïncidence.

**4.** Procédé selon la revendication 3, **caractérisé en ce** qu'un indice de qualité de pas inférieur à 2% et de préférence de 0.5% et meilleur est respecté.

**5.** Procédé selon les revendications 1 à 4, **caractérisé en ce** que le contour destiné à la première mémoire intermédiaire est obtenu par scanning de l'original, transformation de l'information d'image obtenue en données vectorielles, soumission de celles-ci à un programme de reconnaissance de forme, dans lequel des traits vectoriels entiers sont classés comme éléments de forme tels que droite, courbe plate, normale et serrée, coin rond et vif, point de tangente et de retour, et soumission de celles-ci à un spline-fit avec les éléments voisins par lequel on obtient la coïncidence aux points de jointure des coordonnées x-y, pentes et courbures.

**6.** Procédé selon les revendications 1 à 5, **caractérisé en ce** que le contour mémorisé dans la première mémoire intermédiaire se trouve sous une forme à haute résolution selon le format IKARUS, de préférence avec une exactitude de 0,01 mm pour une hauteur de 20 cm.

**7.** Procédé selon les revendications 1 à 6, **caractérisé** par l'intégration de toutes les étapes du procédé dans un programme fonctionnant entièrement automatiquement.

Abbildung 1

Abbildung 2

Abbildung 3

Abbildung 4

Abbildung 5

Abbildung 6

Abbildung 7

Abbildung 8